# DEMANDE DE BREVET EUROPEEN

(11) **EP 0 608 189 A1**
(43) Date de publication de la demande: **27.07.1994**
(21) Numéro de dépôt: 94420018.7
(22) Date de dépôt: 20.01.1994
(51) Int. Cl.: A22B 5/16

(54) **Procédé de dépouille de carcasses d'animaux de boucherie et machine pour sa mise en oeuvre**

(30) Priorité: 22.01.1993 FR 9300838
(71) Demandeur: SARL VENDRAMINI, F-73360 Les Echelles (FR)
(72) Inventeur: Vendramini, Joseph, F-73000 Chambery (FR)
(74) Mandataire: Maureau, Philippe

(57) **Abrégé**

s Ce procédé consiste :
- à réaliser une préparation minimale des carcasses (30), consistant seulement à inciser et à dégager la peau (33) des pattes avant ;
- à suspendre les carcasses (30) par les pattes avant ;
- à pincer de chaque côté de la carcasse (30) la peau (33) des pattes avant qui a été dégagée ;
- à opérer un déplacement relatif des pinces (3) par rapport à la carcasse (30) de manière à dégager la peau (33) de l'animal jusqu'à ce qu'elle ne soit plus retenue que par l'arrière de la tête ;
- à pincer, sans arrêter ledit mouvement relatif, la partie de peau (33) encore retenue à l'arrière de la tête, à opérer un déplacement relatif de cette pince (5) par rapport à la carcasse (30) de manière à arracher cette partie de peau et à poursuivre le mouvement de manière à complètement dépouiller la carcasse.

## Description

La présente invention concerne un procédé de dépouille de carcasses d'animaux de boucherie, tels que des agneaux de lait ou des moutons, et une machine pour sa mise en oeuvre.

Ces animaux de boucherie sont encore de nos jours fréquemment dépouillés à la main, ce qui implique un fastidieux travail de "traçage" de l'animal, c'est-à-dire d'incision de la peau aux endroits appropriés, puis de dégagement de la peau.

Ce traitement des carcasses ne garantit pas toujours une hygiène telle qu'elle est requise par les normes en vigueur, compte tenu des différents contacts de la viande avec le personnel et avec la peau retirée, et du temps nécessaire à l'opération de dépouille. La productivité est faible, ce qui grève notablement le prix de revient de la viande.

De plus, le travail de dépouille du mouton étant difficile et peu rentable, il est difficile de trouver du personnel acceptant encore de travailler dans ce secteur de l'abattage.

En outre, la qualité des peaux obtenues n'est pas parfaite, ces peaux pouvant être déchirées, allongées, marquées ou souillées par un contact avec la viande au cours des différentes manipulations nécessitées par ces opérations.

Il existe des machines pour automatiser la dépouille des animaux de boucherie. Les procédés mis en oeuvre à ce jour conduisent fréquemment à l'enlèvement de la tête de l'animal lors du retrait de la peau et ne permettent pas, par conséquent, de présenter aux services vétérinaires compétents des carcasses avec la tête, ainsi que cela est normalement exigé.

La présente invention vise à remédier à l'ensemble de ces inconvénients.

A cette fin, le procédé qu'elle concerne consiste :
- à réaliser une préparation minimale des carcasses, consistant seulement à inciser et à dégager la peau des pattes avant ;
- à suspendre les carcasses par les pattes avant ;
- à pincer de chaque côté de la carcasse la peau des pattes avant qui a été dégagée ;
- à opérer un déplacement relatif des pinces par rapport à la carcasse selon l'axe longitudinal de celle-ci, de manière à dégager la peau de l'animal jusqu'à ce qu'elle ne soit plus retenue que par l'arrière de la tête ;
- à pincer, sans arrêter ledit mouvement relatif, la partie de peau encore retenue à l'arrière de la tête, à opérer un déplacement relatif de cette pince par rapport à la carcasse, selon l'axe longitudinal de celle-ci, dans le même sens que le déplacement précité, de manière à arracher cette partie de peau, et à poursuivre ces déplacements des pinces de manière à complètement dépouiller la carcasse, cette dernière étant ensuite décrochée pour la suite de son traitement.

Ce procédé permet, outre la réduction de leur préparation, de dépouiller les carcasses selon un mouvement continu évitant une cassure des fibrines de la viande, de manière rapide et parfaite sans risque de cassure ou de déchirure au niveau du cou ou du corps de l'animal, et à cadence rapide, c'est-à-dire jusqu'à plus de 250 carcasses à l'heure.

En effet, le dégagement de la peau du cou de l'animal, réalisé dans la première phase du mouvement, permet ensuite la saisie, juste en arrière de la tête, de la partie de peau restant solidement attachée à cet endroit et, donc, de parfaitement la détacher, sans risque de déchirure du cou et du corps de l'animal.

Aucun contact entre la viande et la partie extérieure de la peau ne se produit au cours de la dépoui le, de telle sorte que les normes d'hygiène sont parfaitement respectées et que les peaux obtenues sont de très bonne qualité, sans déchirure, allongement ou marque d'aucune sorte.

Avantageusement, la traction de la peau dégagée des pattes avant est opérée le long des flancs de l'animal, sensiblement dans le prolongement des pattes avant quand la carcasse est suspendue, afin d'éviter tout risque d'arrachement de la viande avec la peau au niveau du ventre de l'animal, ce risque existant si l'angle de traction de la peau avec l'axe longitudinal de la carcasse est trop grand.

En outre, le procédé consiste, avantageusement, à opérer un déplacement de la pince ayant saisi la peau en arrière du cou, qui soit plus rapide que celui de la paire de pinces précitée, de manière, d'une part, à pratiquer un arrachage net de la peau située en arrière de la tête, grâce à cette vitesse supplémentaire, et, d'autre part, à éviter tout risque d'arrachement de la viande le long du dos de l'animal lors de l'arrachement de la peau du dos, qui est en partie réalisé par cette pince, cet arrachement de la viande pouvant subvenir si l'angle de traction de cette peau par rapport à l'axe longitudinal de la carcasse restait trop important ; le déplacement rapide de cette pince en direction des pinces inférieures permet de rapidement réduire cet angle de traction.

L'invention se rapporte également à la machine de mise en oeuvre de ce procédé, qui comprend essentiellement :
- une paire de pinces venant, de part et d'autre de la carcasse, saisir la partie de peau qui a été préalablement dégagée des pattes avant ;
- des moyens pour opérer le déplacement relatif de cette paire de pinces par rapport à la carcasse selon l'axe longitudinal de celle-ci ;
- une pince apte à saisir la peau restant attachée à l'arrière de la tête de l'animal après dégagement de la peau recouvrant la partie avant de l'animal par la paire de pinces précitée ;
- des moyens pour opérer le déplacement relatif de cette pince par rapport à la carcasse, selon l'axe longitudinal de celle-ci ; et
- des moyens de détection de la position relative de la carcasse par rapport aux pinces et de commande de la fermeture ou de l'ouverture de celles-ci.

Avantageusement, la machine comprend des moyens pour régler la distance séparant la paire de pinces précitée et la pince apte à saisir la peau en arrière de la tête, afin de permettre l'adaptation automatique du dispositif de pinçage aux différentes tailles d'animaux et d'assurer, dans tous les cas, ladite saisie juste en arrière de la tête pour empêcher toute déchirure de la peau ou du cou.

Avantageusement, les moyens pour opérer le déplacement relatif de la pince destinée à saisir la peau située en arrière de la tête sont prévus pour opérer ce déplacement selon une vitesse plus rapide que celui de la paire de pinces précitée.

Selon une forme de réalisation préférée de l'invention, les pinces sont portées par un chariot déplaçable verticalement le long de colonnes de guidage, les carcasses étant portées par un rail suspendu, assurant leur déplacement au sein de l'abattoir et leur positionnement en face du chariot.

Avantageusement, les bras supportant les pinces destinées à opérer une traction de la peau dégagée des pattes avant ont une longueur telle que les pinces 3 sont situées sensiblement au niveau des flancs de l'animal, en cours de traction, c'est-à-dire sensiblement dans le prolongement des pattes avant lorsque la carcasse est suspendue.

De toute façon, l'invention sera bien comprise à l'aide de la description qui suit, en référence au dessin schématique annexé représentant, à titre d'exemple non limitatif, une forme de réalisation préférée de la machine qu'elle concerne.
La figure 1 est une vue en perspective d'un sous- ensemble de cette machine, qui assure le pinçage et le retrait de la peau ;
la figure 2 en est une vue de face ;
la figure 3 est une vue, en coupe selon la ligne III-III de la figure 1 et à échelle agrandie, de l'une des pinces ; et
les figures 4 à 7 sont des vues schématiques de la dépouille d'une carcasse, au cours de quatre phases successives.

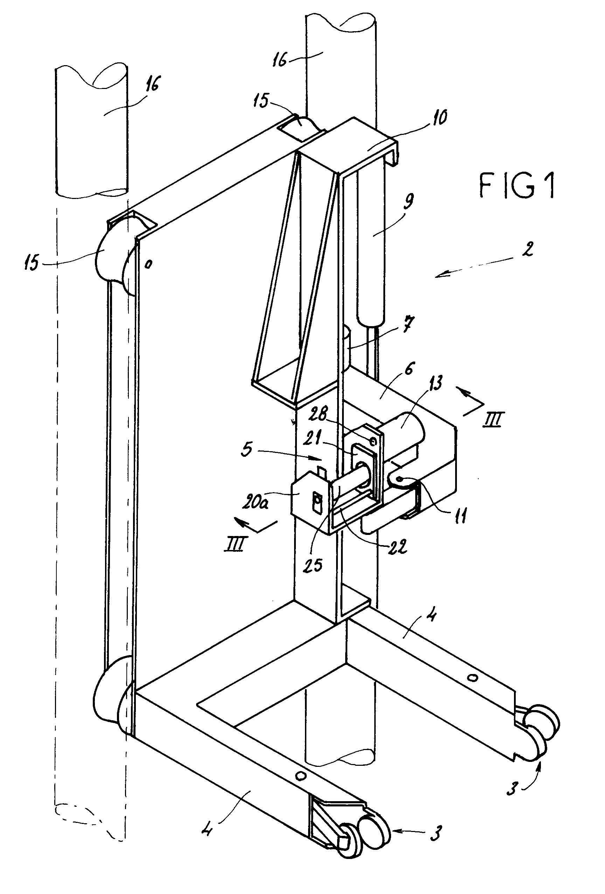

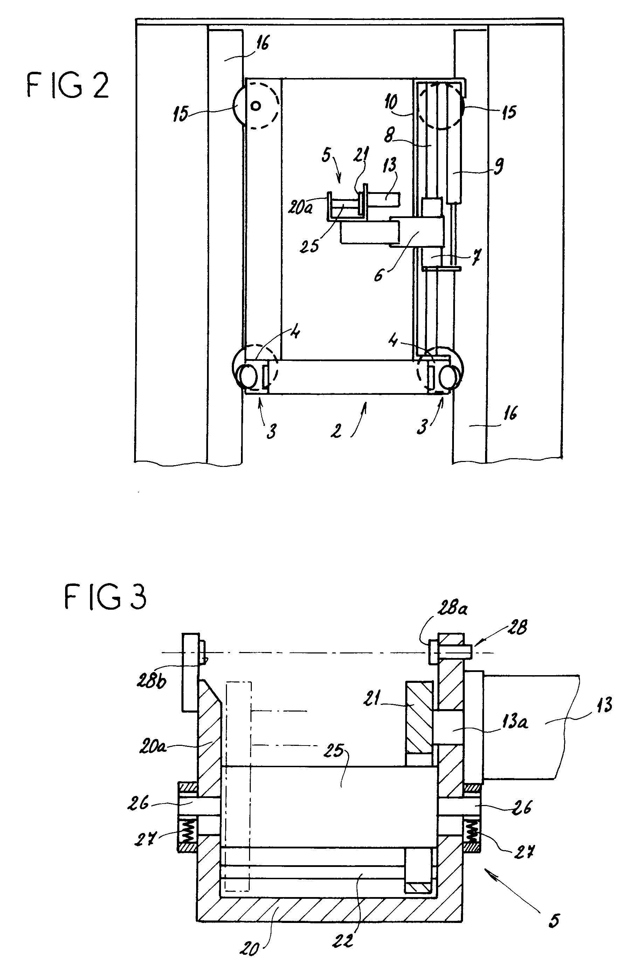

Les figures 1 et 2 représentent sous différents angles un chariot 2 comprenant deux pinces 3 en partie inférieure, portées par des bras parallèles 4, et une pince 5, située au-dessus des pinces 3, portée par un bras 6.

Les bras 4 sont fixes sur le chariot 2 et logent intérieurement des vérins d'actionnement (non visibles) des pinces 3.

Le bras 6 comprend, du côté opposé à la pince 5, un manchon 7 pouvant coulisser le long d'une colonne verticale 8 grâce à un vérin d'actionnement 9, l'ensemble colonne verticale 8-vérin 9 étant porté par un bâti 10 rapporté sur le chariot 2. Le bras 6 loge intérieurement un vérin permettant le pivotement de la pièce 5 autour de l'axe 11 entre une position sortie, représentée sur les figures, où elle se trouve à égale distance des bras 4, et une position escamotée, où elle se trouve repliée le long du bras 6 et permet le passage de la carcasse entre les bras 4.

La pince 5, qui sera décrite plus en détails en référence à la figure 3, est associée à un vérin 13 pour son actionnement.

Le chariot 2 comprend quatre galets 15 roulant le long de colonnes verticales 16 de guidage et est associé à des moyens (non représentés) pour son actionnement, tels qu'un moteur d'entraînement et une transmission par chaîne et pignons.

En outre, le chariot 2 comprend un ou des boutons de commande (non représentés) de la fermeture des pinces 3, avantageusement situés sur l'extrémité des bras 4, pour que l'opérateur puisse, d'un même geste, engager la peau de l'animal dans les pinces 3 et commander, par la pression de ce ou ces boutons, la fermeture des pinces 3 et le commencement du processus de dépouille.

Un contacteur (non représenté), déclenché par le chariot 2 lors de son mouvement le long des colonnes 16, est prévu sur les colonnes 16 afin d'immobiliser le chariot 2 à hauteur adéquate pour ledit engagement de la peau de l'animal dans les pinces 3.

La machine peut comprendre plusieurs ensembles tels que représentés sur les figures 1 et 2, disposés en batterie, pour la dépouille simultanée de plusieurs carcasses.

La figure 3 représente la pince 5, en coupe.

Cette pince 5 comprend une mâchoire fixe formée par l'une des parois latérales 20a d'un corps 20 en forme de U, et par une mâchoire mobile constituée par une plaque 21 montée sur l'extrémité libre de la tige 13a du vérin 13. Ce dernier actionne la plaque 21 en translation entre une position ouverte de la pince 5, représentée en traits pleins sur la figure 3, et une position fermée, représentée en traits mixtes, la plaque 21 étant guidée, en partie inférieure, par des tiges 22.

En outre, la pince 5 comprend, d'une part, un cylindre 25, traversant la plaque 21, qui comprend deux tourillons d'extrémité 26 engagés dans des lumières verticales aménagées dans le corps 20 permettant son mouvement vertical, des ressorts 27 étant prévus pour maintenir normalement le cylindre 25 en position haute. D'autre part, la pince 5 comprend une cellule photosensible 28 constituée par un émetteur 28a et un récepteur 28b de faisceaux lumineux, montés sur la partie supérieure des parois latérales du corps 20.

Le cylindre 25, lorsqu'il est déplacé vers le bas, actionne un contacteur (non représenté) relié aux moyens de commande du vérin 9 et à ceux de mise en fonctionnement de la cellule 28, et la cellule 28 est reliée aux moyens de commande du vérin 13.

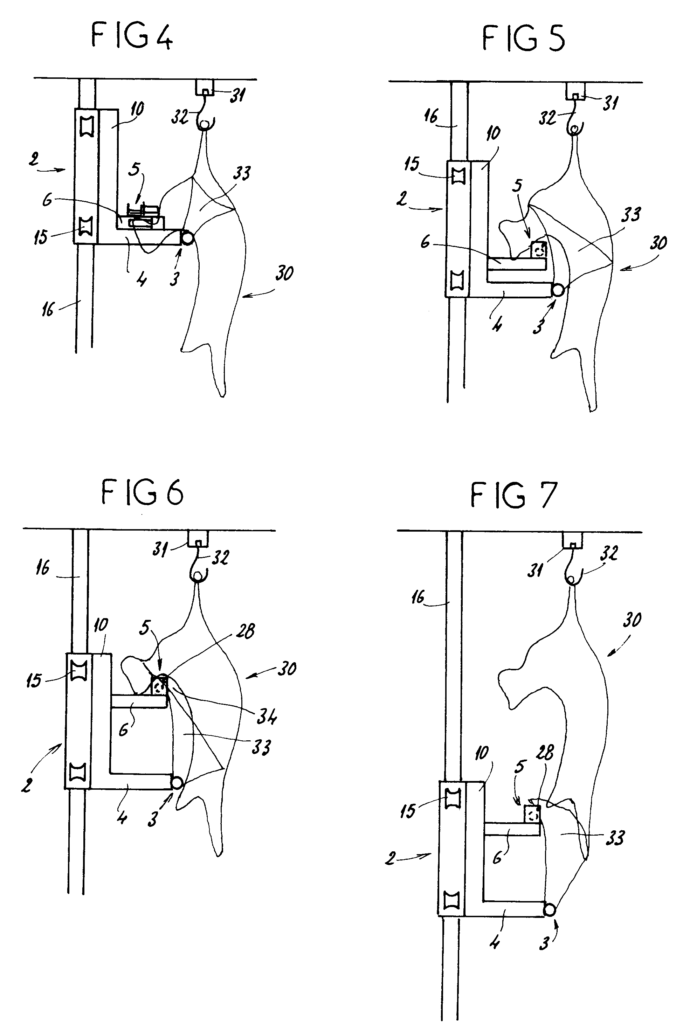

Le procédé objet de l'invention et le fonctionnement de cette machine, qui le met en oeuve, vont être décrits en référence aux figures 4 à 7.

Ce procédé consiste :
- à réaliser une préparation minimale des carcasses 30, consistant seulement à inciser et à dégager la peau des pattes avant ;
- à suspendre les carcasses 30 par les pattes avant à des coulisseaux 31, équipés de crochets 32, circulant dans un rail suspendu ;
- à pincer de chaque côté de la carcasse 30 la peau 33 des pattes avant qui a été dégagée (figure 4) ;
- à opérer un déplacement relatif des pinces 3 par rapport à la carcasse 30 selon l'axe longitudinal de celle-ci (figure 5), de manière à dégager la peau 33 sur la partie avant de l'animal jusqu'à ce qu'elle ne soit plus retenue que par l'arrière de la tête (figure 6) ;
- à pincer, sans arrêter ledit mouvement relatif, la partie de peau encore retenue à l'arrière de la tête (figure 6), à opérer un déplacement relatif de cette pince par rapport à la carcasse, selon l'axe longitudinal de celle-ci, dans le même sens que le déplacement précité, de manière à arracher cette partie de peau, et à poursuivre ces déplacements de manière à complètement dépouiller la carcasse (figure 7), cette dernière étant ensuite décrochée pour la suite de son traitement.

En pratique, au débutdu processus de dépouille, le chariot 2 se trouve au repos en position basse, le bras 6 étant replié. Le coulisseau 31 portant la carcasse 30 à dépouiller actionne, lorsqu'il se trouve en face du chariot 2, un contacteur qui déclenche le mouvement de montée du chariot 2, jusqu'à actionnement par ce dernier du contacteur précité porté par les colonnes 16.

La peau 33 dégagée des pattes avant est engagée dans les pinces 3, puis l'opérateur commande la fermeture des pinces 3 et le début du processus de dépouille. La descente du chariot 2 réalise l'arrachage de la peau 33 selon un mouvement continu évitant une cassure des fibrines de la viande, de manière rapide et parfaite, et selon une cadence pouvant attein- dre plus de 250 carcasses à l'heure.

Un autre contacteur placé sur les colonnes 16 provoque le déploiement du bras 6 après son passage au-delà de la tête de l'animal (figure 5) et montée du bras 6 jusqu'à ce que le cylindre 25 rencontre la partie de peau restant attachée à l'arrière de la tête. Ce contact déplace le cylindre 25 vers le bas, ce qui a pour effet de commander l'arrêt du mouvement de montée du bras 6 et d'activer le fonctionnement de la cellule 28.

Celle-ci est occultée par la peau 33 en cours d'arrachage jusqu'à ce que soit créé le jour 34 entre le dos de l'animal et la peau 33 arrachée (figure 6). Le faisceau arrive alors au récepteur 28b, ce qui commande la fermeture de la pince 5 et, par conséquent, la saisie, juste en arrière de la tête, de la partie de peau restant solidement attachée à cet endroit et permet de parfaitement la détacher sans risque de déchirure du cou.

Grâce à la mobilité du bras 6, la pince 5 est positionnée juste en arrière de la tête pour arracher nettement la peau à cet endroit, indépendamment de la taille des différents animaux.

Avec le procédé et la machine selon l'invention, aucun contact entre la viande et la partie extérieure de la peau ne se produit au cours de la dépouille, de telle sorte que les normes d'hygiène sont parfaitement respectées et que les peaux obtenues sont de très bonne qualité sans déchirure, allongement ou marque d'aucune sorte.

## Revendications

1 - Procédé de dépouille de carcasses d'animaux de boucherie, caractérisé en ce qu'il consiste :
- à réaliser une préparation minimale des carcasses (30), consistant seulement à inciser et à dégager la peau (33) des pattes avant ;
- à suspendre les carcasses (30) par les pattes avant ;
- à pincer de chaque côté de la carcasse (30) la peau (33) des pattes avant qui a été dégagée ;
- à opérer un déplacement relatif des pinces (3) par rapport à la carcasse (30) selon l'axe longitudinal de celle-ci, de manière à dégager la peau (33) de l'animal jusqu'à ce qu'elle ne soit plus retenue que par l'arrière de la tête ;
- à pincer, sans arrêter ledit mouvement relatif, la partie de peau (33) encore retenue à l'arrière de la tête, à opérer un déplacement relatif de cette pince (5) par rapport à la carcasse (30), selon l'axe longitudinal de celle-ci, dans le même sens que le déplacement précité, de manière à arracher cette partie de peau, et à poursuivre ces déplacements des pinces (3,5) de manière à complètement dépouiller la carcasse (30), cette dernière étant ensuite décrochée pour la suite de son traitement.

2 - Procédé selon la revendication 1, caractérisé en ce qu'il consiste, en outre, à opérer la traction de la peau (33) dégagée des pattes avant le long des flancs de l'animal, c'est-à-dire sensiblement dans le prolongement des pattes avant lorsque la carcasse (30) est suspendue.

3 - Procédé selon la revendication 1 ou la revendication 2, caractérisé en ce qu'il consiste, en outre, à opérer un déplacement de la pince (5) ayant saisi la peau en arrière de la tête de l'animal, qui soit plus rapide que celui de la paire de pinces (3) précitée.

4 - Machine de mise en oeuvre du procédé selon l'une des revendications 1 à 3, caractérisée en ce qu'elle comprend :
- une paire de pinces (3) venant, de part et d'autre de la carcasse (30), saisir la partie de peau (33) qui a été préalablement dégagée des pattes avant ;
- des moyens (2,15,16) pour opérer le déplacement relatif de cette paire de pinces (3) par rapport à la carcasse (30) selon l'axe longitudinal de celle-ci ;
- une pince (5) apte à saisir la peau restant attachée à l'arrière de la tête de l'animal après dégagement de la peau recouvrant la partie avant de l'animal par la paire de pinces (3) précitée ;
- des moyens (2,15,16) pour opérer le déplacement relatif de cette pince (5) par rapport à la carcasse (30), selon l'axe longitudinal de celle-ci ; et
- des moyens de détection de la position relative de la carcasse (30) par rapport aux pinces (3, 5) et de commande de la fermeture ou de l'ouverture de celles-ci.

5 - Machine selon la revendication 4, caractérisée en ce qu'elle comprend des moyens (6 à 9 ; 25,28) pour régler la distance séparant la paire de pinces (3) précitée et la pince (5) apte à saisir la peau (33) juste en arrière de la tête.

6 - Machine selon la revendication 4 ou la revendication 5, caractérisée en ce que les pinces (3,5) sont portées par un chariot (2) déplaçable verticalement le long de colonnes (16) de guidage, les carcasses (30) étant portées par un rail suspendu, assurant leur déplacement au sein de l'abattoir et leur positionnement en face du chariot (2).

7 - Machine selon la revendication 6, caractérisée en ce que les moyens pour régler la distance séparant la paire de pinces (3) et la pince (5) apte à saisir la peau (33) juste en arrière de la tête de l'animal sont constitués par, d'une part, une colonne verticale (8) portée par le chariot (2), le long de laquelle peut coulisser le bras (6) portant la pince (5) grâce à un vérin d'actionnement (9) et, d'autre part, un cylindre (25), associé à la pince (5), apte à actionner un contacteur relié aux moyens de commande du vérin (9) lorsqu'il vient en contact avec la peau (33) dégagée de la partie avant de l'animal et restant encore attachée à l'arrière de la tête de celui-ci.

8 - Machine selon l'une des revendications 4 à 7, caractérisée en ce qu'une cellule photo-électrique (28), positionnée à proximité de la pince (5), est reliée aux moyens de commande du vérin (13) d'actionnement de la pince (5) et est apte à détecter le jour (24) créé entre le dos de l'animal et la peau (33) arrachée de la partie avant de celui-ci pour commander la fermeture de la pince (5) et la saisie de la peau située en arrière du cou de l'animal.

9 - Machine selon l'une des revendications 4 à 8, caractérisée en ce que le chariot (2) comprend un ou des boutons de commande de la fermeture des pinces (3) situés sur l'extrémité des bras (4) supportant les pinces (3) de manière à ce que l'opérateur puisse, d'un même geste, engager la peau (33) de l'animal dégagée des pattes avant dans les pinces (3) et commander, par la pression de ce ou ces boutons, la fermeture des pinces (3) et le commencement du processus de dépouille.

10 - Machine selon l'une des revendications 4 à 9, caractérisée en ce que :
- les pinces (3) précitées sont positionnées, en cours de traction, le long des flancs de l'animal, c'est-à-dire sensiblement dans le prolongement des pattes avant lorsque la carcasse est suspendue ; et
- les moyens (6 à 10) pour opérer le déplacement de la pince (5) destinée à saisir la peau restant attachée à l'arrière de la tête, sont prévus pour opérer ce déplacement de la pince (5) selon une vitesse plus rapide que celle de la paire de pinces (3).
